# EUROPÄISCHE PATENTSCHRIFT

(11) **EP 1 743 149 B1**
(45) Veröffentlichungstag und Bekanntmachung des Hinweises auf die Patenterteilung: **07.03.2012**
(21) Anmeldenummer: 05739772.1
(22) Anmeldetag: 03.05.2005
(51) Int. Cl.: G01J 3/42, G01J 9/00, G01N 21/35

(54) **VORRICHTUNG UND VERFAHREN ZUR ERFASSUNG VON HOCHFREQUENZSTRAHLUNG**
DEVICE AND METHOD FOR DETECTING HIGH-FREQUENCY RADIATION
DISPOSITIF ET PROCEDE POUR DETECTER UN RAYONNEMENT HAUTE FREQUENCE

(30) Priorität: 04.05.2004 DE 102004021869
(43) Veröffentlichungstag der Anmeldung: 17.01.2007
(73) Patentinhaber: Löffler, Torsten, 61479 Glashütten (DE); Siebert, Karsten, 61118 Bad Vilbel (DE)
(72) Erfinder: LÖFFLER, Torsten, 61479 Glashütten/Ts. (DE); SIEBERT, Karsten, 61381 Friedrichsdorf (DE); ROSKOS, Hartmut, G., 61473 Kronberg (DE)
(74) Vertreter: WSL Patentanwälte Partnerschaftsgesellschaft
(86) Internationale Anmeldenummer: PCT/EP2005/052026
(87) Internationale Veröffentlichungsnummer: WO 2005/108940

(56) Entgegenhaltungen:
- US-B1- 6 348 683
- LOFFLER T ET AL: "All-optoelectronic continuous-wave terahertz systems" PHILOSOPHICAL TRANSACTIONS OF THE ROYAL SOCIETY LONDON, SERIES A (MATHEMATICAL, PHYSICAL AND ENGINEERING SCIENCES) R. SOC UK, Bd. 362, Nr. 1815, 15. Februar 2004 (2004-02-15), Seiten 263-281, XP002338368 ISSN: 1364-503X
- LOFFLER T ET AL: "Stable Optoelectronic Detection of Free-Running Microwave Signals with 150-GHz Bandwidth" MICROELECTRONIC ENGINEERING, ELSEVIER PUBLISHERS BV., AMSTERDAM, NL, Bd. 31, Nr. 1, Februar 1996 (1996-02), Seiten 397-408, XP004006651 ISSN: 0167-9317 in der Anmeldung erwähnt

## Beschreibung

Die vorliegende Erfindung betrifft eine Vorrichtung zur Erfassung der Amplitude und Phase von elektromagnetischer Dauerstrich Hochfrequenzstrahlung, welche zur Erfassung der Strahlung einer elektrisch getriebenen Hochfrequenz-Quelle ausgelegt ist, mit einer Quelle für ein intensitätsmoduliertes optisches Referenzsignal mit einem ersten optoelektronischen Mischerelement zur Erzeugung mindestens eines elektrischen Messsignals mit der Differenzfrequenz zwischen der Frequenz, der auf das erste optoelektronische Mischerelement einfallenden, zu messenden elektromagnetischen Hochfrequenzstrahlung und der Frequenz der Intensitätsmodulation des optischen Referenzsignals.

Die vorliegende Erfassung betrifft darüber hinaus ein Hochfrequenz-System mit einer Quelle für elektromagnetische Dauerstrich Hochfrequenzstrahlung und einer Vorrichtung zur Erfassung der Amplitude und Phase von elektromagnetischer Dauerstrich Hochfrequenzstrahlung.

Die vorliegende Erfindung betrifft weiterhin ein Verfahren zur Erfassung der Amplitude und Phase von elektromagnetischer Dauerstrich Hochfrequenzstrahlung, wobei die Strahlung einer elektrisch getriebenen Hochfrequenz-Quelle erfaßt wird, wobei ein intensitätsmoduliertes optisches Referenzsignal erzeugt wird und wobei mit einem ersten optoelektronischen Mischerelement mindestens ein elektrisches Messsignal mit der Differenzfrequenz zwischen der Frequenz der elektromagnetischen Hochfrequenzstrahlung und der Frequenz der Intensitätsmodulation des optischen Referenzsignals erzeugt wird.

Aus dem Dokument US 6,348,683 ist ein Verfahren zur optoelektronischen Erfassung optoelektronisch erzeugter Dauerstrich-Hochfrequenzstrahlung bekannt. Dazu wird mit Hilfe eines photokonduktiven Hochfrequenz-Mischers das Schwebungssignal bzw. Intensitätsmodulation zweier räumlich überlagerter optischer Frequenzen in ein elektromagnetisches Hochfrequenzsignal mit der gleichen Frequenz umgesetzt. Das so erzeugte Hochfrequenzsignal wird mit Hilfe eines zweiten photokonduktiven Hochfrequenz-Mischers erfasst, der das Hochfrequenzsignal wiederum mit dem Schwebungssignal der beiden optischen Frequenzen mischt. Das mit dem Detektor gemessene Gleichspannungssignal ist proportional zur Amplitude der Hochfrequenzstrahlung und zum Kosinus der Phasendifferenz zwischen optischem und Hochfrequenzsignal.

Nachteilig bei diesem Verfahren ist, dass es sich um ein Homodynverfahren handelt und bei dem die optischen Signale zur Erzeugung und zur Erfassung der Hochfrequenzstrahlung der gleichen kohärenten Zweifarben-Lichtquelle entstammen müssen. Die Leistung der mit Hilfe von optoelektronischen Mischern erzeugten Hochfrequenzstrahlung ist zudem sehr gering.

Aus dem Stand der Technik sind daher optoelektronische Verfahren und Vorrichtungen zur Erfassung von Amplitude und Phase der Signale freilaufender elektromagnetischer Dauerstrich Hochfrequenzquellen in einem Frequenzbereich bis 75 GHz bekannt.

Ein solches System ist in T. Löffler et al., "Stable Optoelectronic Detection of Free-Runinng Microwave Signals with 150-GHz Bandwidth", Microelectronic Engineering 31, S. 397-408 (1996) offenbart. In dem beschriebenen System wird ein passiv modengelockter Ti:Saphir-Kurzpulslaser verwendet, um das Signal einer frei laufenden Hochfrequenzquelle zeitlich abzutasten. Dabei wird die Wiederholrate des gepulsten Lasersystems durch Anpassen der Resonatorlänge an die Frequenz der Hochfrequenzquelle gekoppelt.

Dazu wird im Stand der Technik das periodische Hochfrequenzsignal des freilaufenden Hochfrequenzoszillators in einem ersten photokonduktiven Hochfrequenz-Mischer mit dem optischen Kurzpulssignal gemischt. Der verwendete photokonduktive Hochfrequenz-Mischer besteht aus einem schnellen photoleitfähigen bzw. photokonduktiven Schalter, dessen elektrischen Anschlüsse mit einer Hochfrequenzantenne verbunden sind. Die in der photoleitenden Schicht des Schalters von der einfallenden Laserstrahlung erzeugten Ladungsträger werden von dem auf die Hochfrequenzantenne einfallenden elektrischen Feld getrieben. Das an den Anschlüssen des photokonduktiven Schalters gemessene Signal hat eine Frequenz, die gleich der Differenzfrequenz zwischen der Frequenz der Hochfrequenzquelle und einem ganzzahligen Vielfachen der Wiederholfrequenz des Lasers ist. Die Phase des gemessenen Signals hängt von der Phasendifferenz zwischen dem auf das Mischerelement einfallenden optischen Signal und dem Hochfrequenzsignal ab. Das Ausgangssignal des ersten photokonduktiven Hochfrequenz-Mischers wird nun auf den Referenzeingang eines Lock-in-Verstärkers gegeben. In einem zweiten photokonduktiven Hochfrequenz-Mischer wird ebenfalls das Mischsignal der beiden Signale erzeugt. Der Ausgang dieses zweiten Mischers ist mit dem Signaleingang des Lock-in-Verstärkers verbunden. Seine Amplitude wird phasensensitiv gemessen. Wird die Laufzeitdifferenz zwischen optischem und Hochfrequenz-Signal variiert, so gibt der Lock-in-Verstärker ein Signal aus, dessen Amplitudenmodulation von der Frequenz des Hochfrequenzsignals und von der Änderung der Laufzeitdifferenz abhängt. Auf diese Weise sind die Frequenz und die Amplitude des Hochfrequenzsignals exakt bestimmbar.

Um die Drift des gemessenen Signals so gering wie möglich zu halten, wird bei Löffler et al. das Ausgangssignal des zweiten optoelektronischen Mischerelements zur Stabilisierung der Wiederholfrequenz des gepulsten Ti:Saphir-Lasers verwendet. Dazu wird mit Hilfe eines elektrischen Oszillators ein stabiles Referenzsignal mit der Frequenz erzeugt, die der gewünschten Frequenz des Mischsignals zwischen Hochfrequenzsignal und dem ganzzahligen Vielfachen der Wiederholfrequenz des optischen Signals entspricht. Die Abweichung zwischen der Frequenz des Ausgangssignals des zweiten optoelektronischen Mischerelements und dem elektrischen Referenzsignal des Oszillators wird mit Hilfe eines frequenzsensitiven Phasendetektor bestimmt. Das Ausgangssignal des frequenzsensitiven Phasendetektors wird zum Regeln der Länge des Resonators des Ti:Saphir-Lasers verwendet. Dazu ist mindestens ein Spiegel des Ti:Saphir-Lasers auf einem Piezoelement montiert.

In der Veröffentlichung von Torsten Löffler et al. "All-optoelectronic coninious-wave terahertz systems", Phil. Trans. R. Soc. Lond. A (2004) 362, Seiten 263 ff. ist ein System angeregt, bei dem die Differenzfrequenz eines kompakten Zweifarbenhalbleiter-Lasers auf einen freilaufenden Quantenkaskaden-Laser Phasen gelockt werden soll. Dabei soll die Zwischenfrequenz zwischen der Schwebungsfrequenz der Halbleiter-Laser und dem Hochfrequenzsignal des Quantenkaskaden-Lasers mit einem Referenzsignal verglichen werden. Eine technische Realisierung eines solchen Systems wird indes nicht offenbart.

Ein Nachteil des aus dem Stand der Technik bekannten Detektionsvorrichtungen ist, dass der für die Erfassung des Hochfrequenzsignals notwendige Kurzpulslaser kosten- und wartungsintensiv ist. Darüber hinaus ist die höchste noch detektierbare Frequenz des Hochfrequenzsignals durch das Phasenrauschen des Kurzpulslasersystems und durch die Differenzfrequenz zwischen der Wiederholfrequenz des optischen Signals und dem zu messenden Hochfrequenzsignal begrenzt.

Der vorliegenden Erfindung liegt gegenüber diesem Stand der Technik die Aufgabe zugrunde eine Vorrichtung zur Erfassung eines Hochfrequenzsignals bereitzustellen, welche die genannten Nachteile überwindet.

Diese Aufgabe wird erfindungsgemäß dadurch gelöst, dass eine optoelektronische Vorrichtung zur Erfassung der Amplitude und Phase von elektromagnetischer Dauerstrich Hochfrequenzstrahlung dahingehend weiterentwickelt wird, dass sie eine Quelle für das intensitätsmodulierte optische Referenzsignal aufweist, die eine Quelle für zwei räumlich überlagerte monochromatische optische Signale ist.

Das für die Durchführung des Verfahrens notwendige optische Signal mit einer Intensitätsmodulation mit hoher Modulationsfrequenz wird erfindungsgemäß auf einfache und im Vergleich zu den aus dem Stand der Technik bekannten Kurzpulslasern kostengünstige Weise erzeugt. Die Überlagerung zweier monochromatischer elektromagnetischer Wellen führt zu einem Schwebungssignal, dessen Strahlungsintensität mit der Differenzfrequenz der beiden überlagerten optischen Signale moduliert ist. Die aus dem Stand der Technik bekannten Quellen für monochromatische optische Signale, insbesondere im infraroten, vorzugsweise im nah-infraroten Frequenzbereich, erlauben eine einfache Frequenzabstimmung und -stabilisierung der beiden optischen Signale. Auf diese Weise kann die Modulationsfrequenz frei gewählt werden und ist vergleichsweise einfach zu stabilisieren.

Mögliche Quellen für die optischen Signale sind beispielsweise Ti:Saphir-Laser oder Halbleiterlaser, wobei wahlweise zwei unabhängige Laser, deren emittierte Strahlung auf einem Strahlteiler räumlich überlagert wird, oder ein auf zwei Farben, vorzugsweise kollinear emittierender Laser verwendet werden können.

Dabei ist ein zweites optoelektronisches Mischerelement zur Erzeugung eines ersten elektrischen Referenzsignals mit der Differenzfrequenz zwischen der elektromagnetischen Hochfrequenzstrahlung und dem intensitätsmodulierten optischen Referenzsignal vorgesehen.

Es ist zweckmäßig, wenn das mindestens eine Messsignal und das erste Referenzsignal Gleichspannungssignale sind, deren Betrag von der Phasenverschiebung zwischen dem elektromagnetischen Hochfrequenzsignal und dem intensitätsmodulierten optischen Referenzsignal abhängig sind. Dies wird erreicht, wenn die Frequenz der Intensitätsmodulation der optischen Strahlung und die Frequenz der einfallenden elektromagnetischen Hochfrequenzstrahlung gleich sind (Homodyndetektion).

Eine Stabilisierung der Frequenzen zwischen dem optischen Schwebungssignal und dem elektromagnetischen Hochfrequenzsignal wird erreicht, indem das erste elektrische Referenzsignal durch Regeln der Differenzfrequenz zwischen den beiden optischen Signalen als Gleichspannungssignal stabilisiert wird. Hierzu sind entsprechende Einrichtungen an der erfindungsgemäßen Vorrichtung vorgesehen.

Besonders bevorzugt wird eine Ausführungsform der Erfindung, bei der das erste elektrische Referenzsignal und das mindestens eine Messsignal Wechselstromsignale sind. Um dies zu erreichen, müssen das elektromagnetische Hochfrequenzsignal und die Intensitätsmodulation des optischen Referenzsignals voneinander verschiedene Frequenzen aufweisen (Heterodyndetektion).

Es ist vorteilhaft, wenn in einem solchen Fall die Differenzfrequenz zwischen der elektromagnetischen Hochfrequenzstrahlung und dem intensitätsmodulierten optischen Referenzsignal zwischen 10 kHz und 1 GHz beträgt.

Liegt die Differenzfrequenz im Bereich von 100 MHz bis 1 GHz, so sind die optoelektronischen Mischerelemente vorzugsweise elektrooptische Kristalle, während im Frequenzbereich von 15 kHz bis 25 kHz die Photomischerelemente vorteilhafterweise photokonduktive Hochfrequenz-Mischer sind.

Eine besonders bevorzugte Ausführungsform der Erfindung weist einen elektrischen Oszillator zur Erzeugung eines zweiten elektrischen Referenzsignals auf.

Dieses zweite elektrische Referenzsignal wird dann zur Stabilisierung des Systems verwendet. Dies kann geschehen, indem die Frequenz des ersten elektrischen Referenzsignals durch Regeln der Differenzfrequenz zwischen den beiden optischen Signalen auf die Frequenz des zweiten elektrischen Referenzsignals stabilisiert wird. Die Vorrichtung weist hierzu entsprechende Einrichtungen auf.

In einer alternativen Ausführungsform ist die Frequenz des ersten elektrischen Referenzsignals mit Hilfe entsprechender Einrichtungen, durch Regeln der Frequenz der Hochfrequenzquelle auf die Frequenz des zweiten elektrischen Referenzsignals, stabilisiert.

Der Vergleich zwischen dem ersten und dem zweiten elektrischen Referenzsignal wird vorzugsweise mit einem frequenzsensitiven Phasendetektor durchgeführt, wobei der frequenzsensitive Phasendetektor ein Steuersignal, in Abhängigkeit von der Differenzfrequenz zwischen dem ersten und dem zweiten Referenzsignal zur Anpassung der Frequenzen einer oder beider optischer Signale ausgibt.

In einer alternativen Ausführungsform zur phasengenauen Messung ist das erste oder zweite elektrische Referenzsignal mit dem Referenz-Eingang eines Lock-in-Verstärkers verbunden. Die Amplitude und Phase des mindestens einen Messsignals werden mit dem mindestens einen Lock-in-Verstärker bestimmt.

Besonders bevorzugt ist eine Ausführungsform der Erfindung, bei der die elektromagnetische Hochfrequenzstrahlung in einem Frequenzbereich zwischen 100 GHz und 100 THz, vorzugsweise zwischen 500 GHz und 10 THz und besonders bevorzugt bei etwa 3 THz liegt.

Bevorzugt wird eine Ausführungsform der Erfindung, bei der mindestens eines der Mischerelemente ein elektrooptischer Detektor ist. Solche elektrooptischen Detektoren weisen nichtlineare optische Kristalle auf, deren Doppelbrechung sich in Abhängigkeit von einem angelegten elektrischen Feld ändert. Werden diese Kristalle als Detektoren für elektromagnetische Hochfrequenzstrahlung eingesetzt, so ändert das elektrische Feld der einfallenden elektromagnetischen Welle die doppelbrechenden Eigenschaften des Kristalls und das ebenfalls in den Kristall einfallenden polarisierte optische Referenzsignal ändert seine Polarisation in Abhängigkeit von der Feldstärke der Hochfrequenzstrahlung. Eine detaillierte Beschreibung von elektrooptischen Detektoren findet sich im Stand der Technik, beispielsweise in A. Nahata et al., "Free-space electro-optic detection of continuous-wave terahertz radiation", Applied Physics Letters, Band 75(17), Seiten 2524 - 2526 (1999) oder Q. Chen et al., "Electro-optic transceivers for terahertz-wave applications", Journal of Optical Society of America B, Band 18(6), Seiten 823-831 (2001).

Besonders bevorzugt wird eine Ausführungsform der Erfindung, bei der mindesten eines der Mischerelemente ein optoelektronischer photokonduktiver Mischer ist. Solche Mischerelemente, die auch als Photomischdetektoren bezeichnet werden, bestehen aus einem schnellen photoleitenden Schalter, der mit dem intensitätsmodulierten optischen Referenzsignal geschaltet wird. Das Gleichzeitig auf das Detektorelement fallende Hochfrequenzsignal wird mit Hilfe einer Empfangseinrichtung, insbesondere einer Antenne, in ein an dem Schalter anliegendes Spannungssignal umgesetzt. Das in dem Schalter erzeugte Stromsignal ist mit der Differenzfrequenz zwischen dem Referenzsignal und dem Hochfrequenzsignal moduliert. Eine ausführliche Beschreibung solcher optoelektronischen Mischerelemente findet sich in Tani et al., "Generation and detection of terahertz radiation by using ultrafast photoconductive antennas", Journal of Communications Research Laboratory, Tokyo, Japan, Band 45(2), Seiten 151-162 (1996).

Zweckmäßig ist es, wenn das Messsignal als Funktion der Phasendifferenz zwischen der Phase der Intensitätsmodulation deroptischen Referenzsignals und der Phase des elektromagnetischen Hochfrequenzsignals erfasst wird. Dazu sind in einer bevorzugten Ausführungsform der Erfindung Einrichtungen zur Variation der Phasendifferenz zwischen dem intensitätsmodulierten optischen Referenzsignal und dem elektromagnetischen Hochfrequenzsignal vor dem ersten optoelektronischen Mischerelement vorgesehen.

Vorzugsweise weist die erfindungsgemäße Vorrichtung zur Variation der Phasendifferenz Einrichtungen zur Variation der Weglängendifferenz zwischen dem intensitätsmodulierten optischen Referenzsignal und dem elektromagnetischen Hochfrequenzsignal auf.

Dabei ist es zweckmäßig wenn die Vorrichtung zur Variation der Phase vor dem ersten optoelektronischen Mischerlement angeordnet ist.

In einer alternativen Ausführungsform sind Einrichtungen zur Variation der geometrischen Phase (Berry-Phase) in dem Strahlengang des elektromagnetischen Hochfrequenzsignals oder des optischen Referenzsignals vor dem ersten Mischerelement vorgesehen.

Als Quelle für die elektromagnetischen Hochfrequenzstrahlung in einem Hochfrequenz-System mit der erfindungsgemäßen Vorrichtung zur Erfassung der Amplitude und der Phase der Hochfrequenzstrahlung ist vorteilhafterweise ein Hochfrequenzoszillator mit nachgeschalteter Vervielfacherkette vorgesehen. Solche Vervielfacherketten sind kommerziell erhältlich und können mit vergleichsweise geringem Aufwand betrieben werden. Dabei ist die Quelle zweckmäßigerweise freilaufend, d.h. sie wird nicht auf eine von dem Detektionsverfahren bereitgestellte Referenzfrequenz stabilisiert.

Eine alternative Ausführungsform des Systems weist einen Quantenkaskaden-Laser oder ein Rückwärtswellen-Generator als freilaufende Quelle für die elektromagnetischen Hochfrequenzstrahlung auf.

Weitere Merkmale, Vorzüge und Anwendungen der vorliegenden Erfindung werden anhand der nachfolgenden Beschreibung bevorzugter Ausführungsformen deutlich.
- Figur 1: zeigt eine schematische Ansicht einer ersten Ausführungsform der erfindungsgemäßen Vorrichtung.
- Figur 2: zeigt eine schematische Ansicht einer zweiten Ausführungsform der erfindungsgemäßen Vorrichtung.
- Figur 3: zeigt eine schematische Ansicht einer weiteren Ausführungsform der erfindungsgemäßen Vorrichtung.

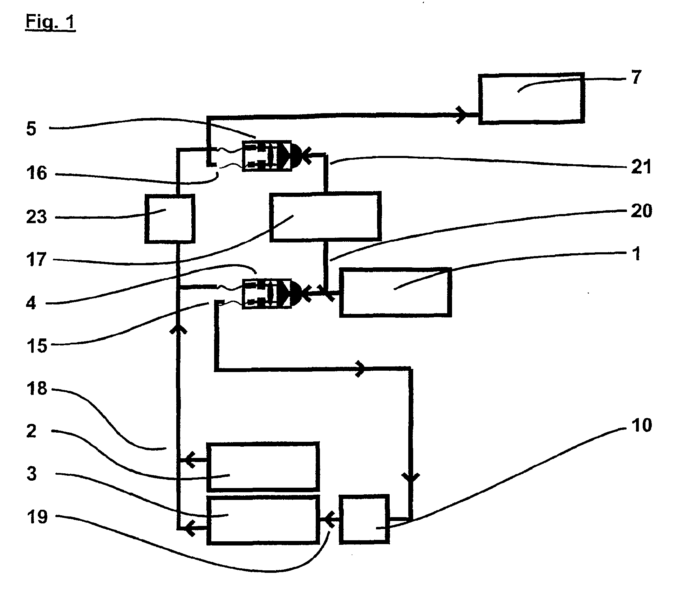

Im folgenden werden drei bevorzugte Ausführungsformen der Erfindung dargestellt. Dabei sind immer komplette Hochfrequenz-Systeme mit einer Hochfrequenz-Quelle und einer erfindungsgemäßen Vorrichtung zur Erfassung der Amplitude und der Phase der Hochfrequenzstrahlung dargestellt. Zunächst werden die, den in den Figuren 1 bis 3 dargestellten Ausführungsformen gemeinsamen Aspekte der Erfindung beschrieben.

Die hochfrequente Strahlung wird jeweils von einer freilaufenden Quelle 1 erzeugt und liegt im Frequenzbereich von 100 GHz bis 30 THz. In den dargestellten Ausführungsformen handelt es sich bei der freilaufenden Quelle um einen Terahertz- (THz-) Quantenkaskadenlaser. In alternativen Ausführungsformen werden elektronische Oszillatoren (ggf. mit Vervielfachern) oder jede andere Art von Hochfrequenz-Dauerstrich-Strahlungsquellen eingesetzt. Bevorzugt sind THz-Frequenzen von ca. 2-3 THz, da in diesem Frequenzbereich leistungsstarke THz-Quantenkaskadenlaser verfügbar sind, und eine effiziente optoelektronische Detektion mit Hilfe von ZnTe-Kristallen möglich ist.

Die hochfrequente Strahlung wird dann zu einem Teil auf einen optoelektronischen Detektor 4 geleitet, welcher als Referenzdetektor eingesetzt wird. Bei dem Referenzdetektor handelt es sich in den dargestellten Ausführungsformen um eine elektrooptische Detektionsanordnung mit einer Antenne zum Empfang der Hochfrequenzstrahlung. In alternativen Ausführungsformen kann der Referenzdetektor jedoch auch als photokonduktiver Hochfrequenz-Mischer realisiert sein.

Ein anderer Teil der hochfrequenten Strahlung durchläuft ein Test oder Messsystem 17. Dabei wird das Signal beispielsweise um einen zu messenden Faktor abgeschwächt und erfährt eine zu messende Phasenverschiebung. Das dargestellte Messsystem arbeitet in Transmissionsgeometrie. Jedoch ist auch ein Betrieb in Reflexionsgeometrie möglich. Mit Hilfe eines Abrasterns der Probe sind auch bildgebende Verfahren möglich.

Nach dem Durchlaufen des Test- oder Messsystems wird der zu messende Anteil der hochfrequenten Strahlung auf einen optoelektronischen Detektor 5 geleitet. Dieser Detektor wird als Messdetektor zur Erfassung des Nutzsignals verwendet.

Der optoelektronische Referenzdetektor und der optoelektronische Messdetektor werden dabei mit einem intensitätsmodulierten optischen Signal 18 (z.B. im sichtbaren oder nah-infrarotem Frequenzbereich) beleuchtet. Dieses intensitätsmodulierte optische Signal wird durch räumliche Überlagerung von zwei Dauerstrich-Lasersignalen der Laser 2 und 3 an einem Strahlteiler erzeugt. Bei den Lasern handelt es sich um monofrequente Diodenlaser. Alternativ können jedoch auch Festkörperlaser verwendet werden. Auch die Verwendung einer integrierten Zwei-Farben-Laserquelle ist möglich.

### Bevorzugte Ausführungsform nach Figur 1

Eine erste mögliche Ausführungsform ist in Figur 1 dargestellt. Diese Ausführungsform zeichnet sich dadurch aus, dass hier eine optische Intensitätsmodulation mit einer Frequenz erzeugt wird, welche exakt der Frequenz der hochfrequenten Strahlung entspricht.

Ziel ist es dabei, die Frequenz der Intensitätsmodulation des optischen Signals so zu regeln, dass diese exakt gleich bzw. sehr ähnlich der Frequenz der zu detektierenden hochfrequenten Strahlung ist.

Dieses wird erreicht, indem die Phasendifferenz zwischen der hochfrequenten Strahlung und der optischen Intensitätsmodulation mit dem ersten optoelektronischen Referenzdetektor 4 gemessen wird. Das elektrische Ausgangssignal dieses Referenzdetektors wird dann verwendet, um mittels eines elektrischen Proportional-Integral-Differenzial- (PID-) Reglers 10 ein Steuersignal 19 für die Frequenz des optischen Lasers 3 zu erzeugen. Mit dieser Steuerung der Frequenz des einen Lasers 3 wird dann auch die Frequenz der Intensitätsmodulation des Schwebungssignals der beiden überlagerten Laser 2, 3 variiert, da die Schwebungsfrequenz der Differenzfrequenz zwischen den beiden Lasern 2, 3 entspricht.

Auf diese Weise wird ein Regelkreis gebildet, bei welchem ähnlich wie bei einer elektronischen Phase-Locked-Loop- (PLL-) Regelung, die Frequenz und die Phase der optischen Intensitätsmodulation exakt der Frequenz und der Phase der hochfrequenten Strahlung angepasst wird.

Sobald diese exakte Anpassung der Frequenz und Phase erfolgt ist, wird auch vom Messdetektor bzw. Photomischdetektor 5 ein elektrisches Gleichspannungssignal erzeugt, welches einerseits direkt von der Amplitude des zu messenden hochfrequenten Signals und zusätzlich direkt vom Sinus der Phasendifferenz zwischen dem hochfrequenten Messsignal und der optischen Intensitätsmodulation am Ort des Messdetektors abhängig ist.

Um weiterhin die vollständige Information über Frequenz, Amplitude und Phase des Messsignals zu erfassen, muss die Phase der optischen Intensitätsmodulation, welche auf den optoelektronischen Messdetektor fällt, variiert werden. Dies erfolgt mit Hilfe einer mechanischen Verzögerungsstrecke 23. Am Ausgang des zweiten optoelektronischen Messdetektors 5 wird das zeitaufgelöste Messsignal als Funktion der Phasenverzögerung, also auf einer absoluten Zeitskala gemessen. Mittels Anpassung der Messdaten kann die Amplitude und die Phase des Messsignals bestimmt werden.

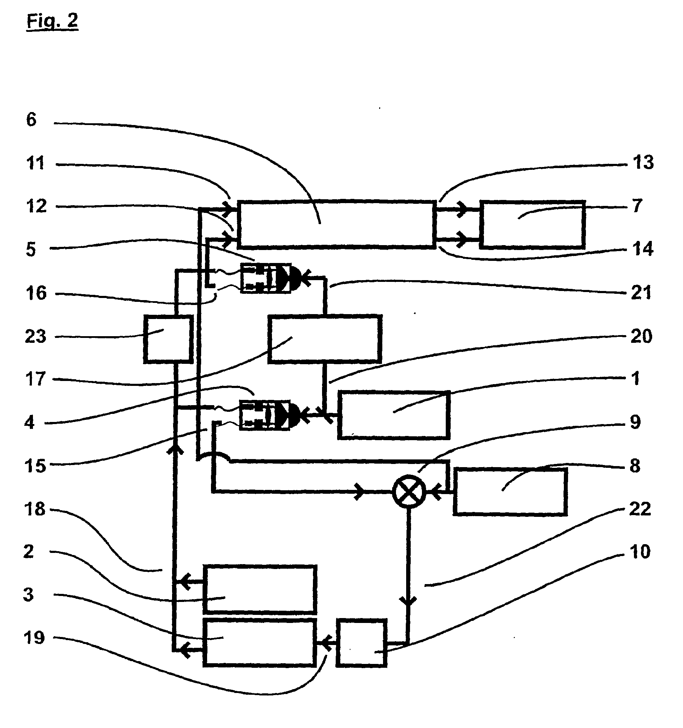

### Bevorzugte Ausführungsform nach Figur 2

Eine zweite bevorzugte Ausführungsvariante ist in Figur 2 dargestellt. Hier wird im Gegensatz zu der Ausführungsform aus Figur 1 ein endlicher Frequenzunterschied (Zwischenfrequenz) zwischen der zu detektierenden hochfrequenten Strahlung und der Frequenz der optischen Intensitätsmodulation eingestellt.

Dieses Zwischenfrequenzsignal wird mit Hilfe des optoelektronischen Referenzdetektors 4 erzeugt. Mittels eines Phasendetektors oder, wie in der bevorzugten Ausführungsform gemäß Figur 2, mittels eines frequenzempfindlichen Phasendetektors wird das erfasste Zwischenfrequenzsignal dann mit einem Signal mit einer Soll-Zwischenfrequenz, das von einem elektronischen Oszillator 8 erzeugt wird, verglichen. Das Frequenz- bzw. Phasenfehlersignal wird dann verwendet, um mit einem PID-Regler 10 die Frequenz des einen sichtbaren oder nah-infraroten Lasers 2 zu steuern, so dass die mit dem Referenzdetektor 4 erzeugte Zwischenfrequenz phasenstabil auf das Signal des elektronischen Oszillators 8 synchronisiert wird.

Nach dem Durchlaufen des Messsystems 17 wird das Hochfrequenzsignal als eigentliches Messsignal mit einem zweiten optoelektronischen Messdetektor 5 erfasst. Das so erzeugte elektrische Signal wird auf den Messeingang 12 eines Lock-In-Verstärkers 6 geführt, während das Signal des elektrischen Oszillators mit der Soll-Zwischenfrequenz 8 auf den Referenzeingang 11 des Lock-In-Verstärkers 6 geführt wird.

In dieser Ausführungsform wird mit dem Lock-In-Verstärker die Amplitude 13 und die Phase 14 des Messsignals ermittelt. Die der Amplitude und Phase entsprechenden Signale werden dann von einem elektronischen Datenerfassungssystem 7 aufgenommen.

Falls eine Bestimmung der absoluten Frequenz des Messsignals erwünscht ist, kann die Phase zusätzlich mittels einer mechanischen Verzögerungsstrecke 23 auf einer absoluten Zeitskala variiert werden. Durch Anpassung der Messdaten ist dann eine Bestimmung der absoluten Periodenlänge des Messsignals und damit auch der Frequenz möglich.

Das Messsystem 17 besteht wie auch bei den vorangegangenen Ausführungsformen aus einer Anordnung von Abbildenden Optiken, die es ermöglichen ein Objekt punktförmig oder alternativ dazu auch flächig zu durchleuchten.

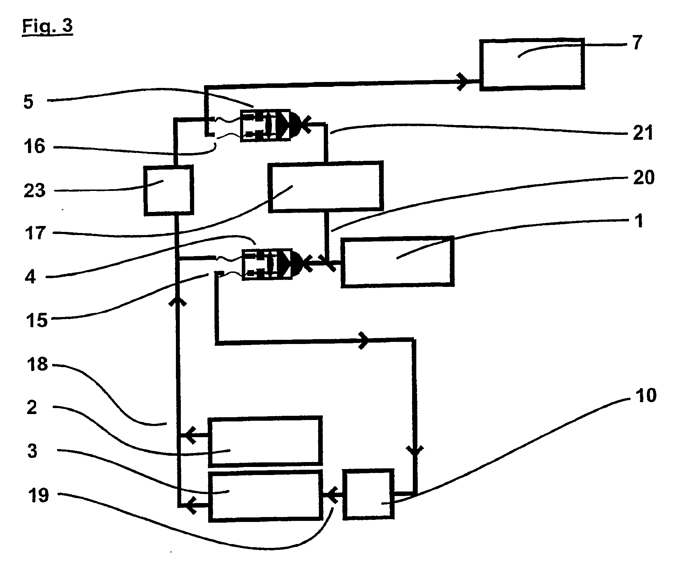

### Bevorzugte Ausführungsform nach Figur 3

Diese weitere Ausführungsform unterscheidet sich im wesentlichen von der bevorzugten Ausführungsvariante nach Figur 2 dadurch, dass nicht das Signal des elektronischen Oszillators 8 mit der Soll-Zwischenfrequenz, sondern das elektrische Signal 15 welches vom ersten optoelektronischen Referenz-Detektor 4 erzeugt wird, als Referenzsignal 11 für den Lock-In-Verstärker 6 verwendet wird.

Dadurch werden die Ansprüche an die Frequenzregelung der optischen Intensitätsmodulation deutlich reduziert, da keine phasenstabile Regelung mehr notwendig ist, sondern nur eine relativ grobe Nachregelung der absoluten Zwischenfrequenz erfolgt. Wenn die Komponenten des Systems eine ausreichend hohe Frequenzstabilität aufweisen, ist unter Umständen keine Nachregelung mehr notwendig.

Eine phasengenaue Bestimmung des Messsignals erfolgt jedoch weiterhin, so dass die Phasenstabilität der Signale der beiden optoelektronischen Detektoren zueinander, und damit die Phasenstabilität zwischen Referenz- und Messsignal am Eingang des Lock-In-Verstärkers erhalten bleibt.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

### Bezugszeichenliste

- 1: Freilaufende Hochfrequenzquelle
- 2: Erster nah-infraroter Laser
- 3: Zweiter nah-infraroter Laser (geregelt)
- 4: Optoelektronischer Referenzdetektor (Mischer)
- 5: Optoelektronischer Messdetektor (Mischer)
- 6: Lock-In Verstärker
- 7: Datenerfassung
- 8: Elektronischer Referenzoszillator
- 9: Frequenzempfindlicher Phasendetektor
- 10: PID-Regler
- 11: Referenz Eingang des Lock-In Verstärkers
- 12: Signal Eingang des Lock-In Verstärkers
- 13: Amplituden Ausgang des Lock-In Verstärkers
- 14: Phasen Ausgang des Lock-In Verstärkers
- 15: Referenzsignal
- 16: Elektrisches Messsignal
- 17: Testobjekt oder Messsystem
- 18: Intensitätsmoduliertes optisches Signal
- 19: Frequenzregelsignal für zweiten Laser
- 20: Hochfrequenzsignal für Messsystem und Referenzdetektor
- 21: Hochfrequenzsignal hinter Messobjekt oder Testsystem
- 22: Phasenfehlersignal
- 23: Zeit bzw. Phasenschieber (z.B. mechanische Verschiebestrecke)

## Patentansprüche

1. Vorrichtung zur Erfassung der Amplitude und Phase von elektromagnetischer Dauerstrich Hochfrequenzstrahlung,
- die zur Erfassung der Strahlung einer elektrisch getriebenen Hochfrequenz-Quelle (1) ausgelegt ist,
- mit einer Quelle (2, 3) für ein intensitätsmoduliertes optisches Referenzsignals
- wobei die Quelle (2, 3) für das intensitätsmodulierte optische Referenzsignal (18) eine Quelle für zwei räumlich überlagerte monochromatische optische Signale ist,
- mit einem ersten optoelektronischen Mischerelement (5) zur Erzeugung mindestens eines elektrischen Messsignals (16) mit der Differenzfrequenz zwischen der Frequenz, der auf das erste optoelektronische Mischerelement (5) einfallenden, zu messenden elektromagnetischen Hochfrequenzstrahlung (21) und der Frequenz der Intensitätsmodulation des optischen Referenzsignals (18),- mit einem zweiten optoelektronischen Mischerelement (4) zur Erzeugung eines ersten elektrischen Referenzsignals (15), welches eine Frequenz aufweist, die gleich der Differenzfrequenz zwischen der Frequenz der zu messenden elektromagnetischen Hoch-frequenzstrahlung (20,21) und der Frequenz der Intensitätsmodulation des optischen Referenzsignals (18) ist, und
- mit einer Einrichtung zur Erfassung (7) des Messsignals als Funktion der Phasendifferenz zwischen der Phase der Intensitätsmodulation des optischen Referenzsignals (18) und der Phase des elektromagnetischen Hochfrequenzsignals (20, 21), und
a) mit einer Einrichtung (23) zum Variieren der Phasendifferenz zwischen der Phase der Intensitätsmodulation des optischen Referenzsignals (18) und der Phase des elektromagnetischen Hochfrequenzsignals (20, 21),
wobei die Frequenz der Intensitätsmodulation der optischen Strahlung und die Frequenz der einfallenden elektromagnetischen Hochfrequenzstrahlung gleich sind, so dass das Messsignal und das erste elektrische Referenzsignal Gleichspannungssignale sind, deren Betrag von der Phasenverschiebung zwischen dem elektromagnetischen Hochfrequenzsignal und dem intensitätsmodulierten optischen Referenzsignal abhängig sind, und
mit einer Einrichtung zum Regeln (10) der Differenzfrequenz zwischen den beiden optischen Signalen und zum Stabilisieren des ersten elektrischen Referenzsignals (15) als Gleichspannungssignal,
oder
b) mit einer Einrichtung (23) zum Variieren der Phasendifferenz zwischen der Phase der Intensitätsmodulation des optischen Referenzsignals (18) und der Phase des elektromagnetischen Hochfrequenzsignals (20, 21),
wobei die Intensitätsmodulation der optischen Strahlung und die elektromagnetische Hochfrequenzstrahlung voneinander verschiedene Frequenzen aufweisen, so dass das Messsignal und das erste elektrische Referenzsignal Wechseispannungssignale sind,
mit einem elektrischen Oszillator zur Erzeugung eines zweiten elektrischen Referenzsignals und
mit einer Einrichtung zur Regelung (10) der Frequenz der Intensitätsmodulation des optischen Referenzsignals (18) auf die Frequenz des zweiten elektrischen Referenzsignals und zum Stabilisieren der Frequenz des ersten elektrischen Referenzsignals (15) oder mit einer Einrichtung zum Regeln der Frequenz der Hochfrequenzquelle (1) und zum Stabilisieren der Frequenz des ersten elektrischen Referenzsignals (15) auf die Frequenz des zweiten elektrischen Referenzsignals,
oder
c) wobei die Intensitätsmodulation der optischen Strahlung und die elektromagnetische Hochfrequenzstrahlung voneinander verschiedene Frequenzen aufweisen, so dass das Messsignal und das erste elektrische Referenzsignal Wechselstromsignale sind, und
wobei das Messsignal (16) mit dem Signaleingang (12) mindestens eines Lock-in-Verstänkers (6) zur Bestimmung der Amplitude und der Phase des zu messenden Hochfrequenzsignals (21) verbunden ist,
wobei das erste elektrische Referenzsignal mit dem Referenz-Eingang des Lock-in-Verstärkers verbunden ist.

2. Vorrichtung nach Anspruch 1, **dadurch gekennzeichnet, dass** die Differenzfrequenz zwischen der elektromagnetischen Hochfrequenzstrahlung (20,21) und dem intensitätsmodulierten optischen Referenzsignal (18) zwischen 10 kHz und 1 GHz, bevorzugt zwischen 100 MHz und 1 GHz und besonders bevorzugt zwischen 15 kHz und 25 kHz liegt

3. Vorrichtung nach einem der Ansprüche 1 oder 2, **dadurch gekennzeichnet, dass** sie einen frequenzsensitiven Phasendetektor (9) zum Vergleichen des ersten (15) und des zweiten elektrischen Referenzsignals miteinander aufweist, wobei der frequenzsensitive Phasendetektor (9) zur Ausgabe eines Steuersignals (22), in Abhängigkeit von der Differenzfrequenz und/oder der Phasendifferenz zwischen dem ersten (15) und dem zweiten Referenzsignal zur Anpassung der Frequenz der Intensitätsmodulation des optischen Referenzsignals (18) und/oder der Frequenz der Hochfrequenzquelle (1) eingerichtet ist.

4. Vorrichtung nach einem der Ansprüche 1 bis 3, **dadurch gekennzeichnet, dass** das erste (15) oder zweite elektrische Referenzsignal mit dem Referenz-Eingang (11) mindestens eines Lock-in-Verstärkers (6) verbunden ist.

5. Vorrichtung nach einem der Ansprüche 1 bis 4, **dadurch gekennzeichnet, dass** die Mischerelemente (4, 5) zur Erfassung der elektromagnetischen Hochfrequenzstrahlung (20, 21) für einen Frequenzbereich zwischen 100 GHz und 100 THz, vorzugsweise zwischen 500 GHz und 10 THz und besonders bevorzugt von etwa 3 THz ausgelegt sind.

6. Vorrichtung nach einem der Ansprüche 1 bis 5, **dadurch gekennzeichnet, dass** die optischen Signale (18) infrarote, vorzugsweise nah-infrarote Frequenzen aufweisen.

7. Vorrichtung nach einem der Ansprüche 1 bis 6, **dadurch gekennzeichnet, dass** die Quelle (2, 3) für die räumlich überlagerten optischen Signale mindestens einen Ti:Saphir-Lasern aufweist.

8. Vorrichtung nach einem der Ansprüche 1 bis 7, **dadurch gekennzeichnet, dass** die Quelle (2, 3) für die räumlich überlagerten optischen Signale mindestens einen Halbleiterlaser aufweist.

9. Vorrichtung nach einem der Ansprüche 1 bis 8, **dadurch gekennzeichnet, dass** die Quelle für die räumlich überlagerten optischen Signale mindestens einen Strahlteiler zur räumlichen Überlagerung der beiden optischen Signale aufweist.

10. Vorrichtung nach einem der Ansprüche 1 bis 9, **dadurch gekennzeichnet, dass** mindestens ein Mischerelement (4,5) ein elektrooptischer Detektor ist.

11. Vorrichtung nach einem der Ansprüche 1 bis 10, **dadurch gekennzeichnet, dass** mindestens ein Mischerelement (4, 5) ein optoelektronischer photokonduktiver Hochfrequenz-Mischer ist.

12. Vorrichtung nach einem der Ansprüche 1 bis 11, **dadurch gekennzeichnet**, das sie zur Variation der Phasendifferenz eine Einrichtung (23) zur Variation der Weglängendifferenz zwischen dem intensitätsmodulierten optischen Referenzsignal (18) und dem elektromagnetischen Hochfrequenzsignal (20, 21) aufweist.

13. Vorrichtung nach einem der Ansprüche 1 bis 12, **dadurch gekennzeichnet**, das sie zur Variation der Phasendifferenz eine Einrichtung (23) zur Variation der geometrischen Phase des intensitätsmodulierten optischen Referenzsignals oder des elektromagnetischen Hochfrequenzsignals (20, 21) aufweist.

14. Hochfrequenz-System mit einer Vorrichtung zur Erfassung der Amplitude und Phase von elektromagnetischer Dauerstrich Hochfrequenzstrahlung nach einem der Ansprüche 1 bis 13, **dadurch gekennzeichnet, dass** die elektrisch getriebene Quelle (1) der elektromagnetischen Hochfrequenzstrahlung ein Hochfrequenzoszillator mit nachgeschalteter Vervielfacherkette ist.

15. Hochfrequenz-System mit einer Vorrichtung zur Erfassung der Amplitude und Phase von elektromagnetischer Dauerstrich Hochfrequenzstrahlung nach einem der Ansprüche 1 bis 13, **dadurch gekennzeichnet, dass** die elektrisch getriebene Quelle (1) der elektromagnetischen Hochfrequenzstrahlung ein Quantenkaskaden-Laser ist

16. Hochfrequenz-System mit einer Vorrichtung zur Erfassung der Amplitude und Phase von elektromagnetischer Dauerstrich Hochfrequenzstrahlung nach einem der Ansprüche 1 bis 13, **dadurch gekennzeichnet, dass** die elektrisch getriebene Quelle (1) der elektromagnetischen Hochfrequenzstrahlung ein Rückwärtswellen-Generator ist.

17. Verfahren zur Erfassung von Amplitude und Phase von elektromagnetischer Dauerstrich Hochfrequenzstrahlung,
- wobei die Strahlung einer elektrisch getriebenen Hochfrequenz-Quelle (1) erfasst wird,
- wobei ein intensitätsmoduliertes optisches Referenzsignal (18) erzeugt wird,
- wobei das intensitätsmodulierte optische Referenzsignal durch räumliche Überlagerung zweier monochromatischer optischer Signale erzeugt wird,
- wobei mit einem ersten optoelektronischen Mischerelement (5) mindestens ein elektri-sches Messsignal (16) mit der Differenzfrequenz zwischen der Frequenz der elektromagnetischen Hochfrequenzstrahlung (21) und der Frequenz der Intensitätsmodulation des optischen Referenzsignals (18) erzeugt wird, und
- wobei ein erstes elektrisches Referenzsignal (15) erzeugt wird, das eine Frequenz aufweist, die gleich der Differenzfrequenz zwischen der Frequenz der zu messenden elektro-magnetischen Hochfrequenzstrahlung (20, 21) und der Frequenz der Intensitätsmodulation des optischen Referenzsignals (18) ist,
- wobei die Phasendifferenz zwischen zwischen der Phase der Intensitätsmodulation des optischen Referenzsignals (18) und der Phase des elektromagnetischen Hochfrequenzsignals (20, 21) variiert wird,
- wobei das Messsignal als Funktion der Phasendifferenz zwischen der Phase der intensitätsmodulation des optischen Referenzsignals (18) und der Phase des elektromagnetischen Hochfrequenzsignals (20, 21) erfasst wird, und
a) wobei die Frequenz der Intensitätsmodulation der optischen Strahlung und die Frequenz der einfallenden elektromagnetischen Hochfrequenzstrahlung gleich sind, so dass das Messsignal und das erste elektrische Referenzsignal Gleichspannungssignale sind, deren Betrag von der Phasenverschiebung zwischen dem elektromagnetischen Hochfrequenzsignal und dem intensitätsmodulierten optischen Referenzsignal abhängig sind, und
wobei die Differenzfrequenz zwischen den beiden optischen Signalen geregelt wird und wobei das erste elektrische Referenzsignals (15) als Gleichspannungssignal stabilisiert wird,
oder
b) wobei die Intensitätsmodulation der optischen Strahlung und die elektromagnetische Hochfrequenzstrahlung voneinander verschiedene Frequenzen aufweisen, so dass das Messsignal und das erste elektrische Referenzsignal Wechselspannungssignale sind,
wobei mit einem elektrischen Oszillators ein zweites elektrisches Referenzsignal erzeugt wird und
wobei die Frequenz der Intensitätsmodulation des optischen Referenzsignals (18) auf die Frequenz des zweiten elektrischen Referenzsignals geregelt wird und wobei die Frequenz des ersten elektrischen Referenzsignals (15) stabilisiert wird oder wobei die Frequenz der Hochfrequenzquelle (1) geregelt wird und die Frequenz des ersten elektrischen Referenzsignals (15) auf die Frequenz des zweiten elektrischen Referenzsignals stabilisiert wird,
oder
c) wobei die Intensitätsmodulation der optischen Strahlung und die elektromagnetische Hochfrequenzstrahlung voneinander verschiedene Frequenzen aufweisen, so dass das Messsignal und das erste elektrische Referenzsignal Wechselstromsignale sind,
wobei die Amplitude und die Phase des zu messenden Hochfrequenzsignals (21) bestimmt wird, wobei das Messsignal (16) mit dem Signaleingang (12) mindestens eines Lock-in-Verstärkers (6) verbunden ist, und
wobei das erste elektrische Referenzsignal mit dem Referenz-Eingang des Lock-in-Verstärkers verbunden ist.

18. Verfahren nach Anspruch 17 zum Betrieb einer Vorrichtung nach einem der Ansprüche 1 bis 16.

## Claims

1. Apparatus for detecting the amplitude and phase of electromagnetic continuous-wave high-frequency radiation
- which is adapted to detect the radiation of an electrically driven high-frequency source (1),
- having a source (2, 3) for an intensity-modulated optical reference signal,
- wherein the source (2, 3) for the intensity-modulated optical reference signal (18) is a source for two spatially superposed monochromatic optical signals,
- having a first optoelectronic mixer element (5) for producing at least one electrical measurement signal (16) with the difference frequency between the frequency of the electromagnetic high-frequency radiation (21) to be measured which is incident on the first optoelectronic mixer element (5) and the frequency of the intensity modulation of the optical reference signal (18),
- having a second optoelectronic mixer element (4) for producing a first electrical reference signal (15) of a frequency which is equal to the difference frequency between the frequency of the electromagnetic high-frequency radiation (20, 21) to be measured and the frequency of the intensity modulation of the optical reference signal (18), and
- having a device for detecting (7) the measurement signal as a function of the phase difference between the phase of the intensity modulation of the optical reference signal (18) and the phase of the electromagnetic high-frequency signal (20, 21), and
a) having a device (23) for varying the phase difference between the phase of the intensity modulation of the optical reference signal (18) and the phase of the electromagnetic high-frequency signal (20, 21),
wherein the frequency of the intensity modulation of the optical radiation and the frequency of the incident electromagnetic high-frequency radiation are equal so that the measurement signal and the first electrical reference signal are dc voltage signals, the magnitude of which is dependent on the phase displacement between the electromagnetic high-frequency signal and the intensity-modulated optical reference signal, and
having a device for regulating (10) the difference frequency between the two optical signals and for stabilising the first electrical reference signal (15) as a dc voltage signal,
or
b) having a device (23) for varying the phase difference between the phase of the intensity modulation of the optical reference signal (18) and the phase of the electromagnetic high-frequency signal (20, 21),
wherein the intensity modulation of the optical radiation and the electromagnetic high-frequency radiation have mutually different frequencies so that the measurement signal and the first electrical reference signal are ac voltage signals,
having an electrical oscillator for producing a second electrical reference signal, and
having a device for regulating (10) the frequency of the intensity modulation of the optical reference signal (18) to the frequency of the second electrical reference signal and for stabilising the frequency of the first electrical reference signal (15) or having a device for regulating the frequency of the high-frequency source (1) and for stabilising the frequency of the first electrical reference signal (15) to the frequency of the second electrical reference signal,
or
c) wherein the intensity modulation of the optical radiation and the electromagnetic high-frequency radiation are of mutually different frequencies so that the measurement signal and the first electrical reference signal are ac signals, and
wherein the measurement signal (16) is connected to the signal input (12) of at least one lock-in amplifier (6) for determining the amplitude and the phase of the high-frequency signal (21) to be measured,
wherein the first electrical reference signal is connected to the reference input of the lock-in amplifier.

2. Apparatus according to claim 1 **characterised in that** the difference frequency between the electromagnetic high-frequency radiation (20, 21) and the intensity-modulated optical reference signal (18) is between 10 kHz and 1 GHz, preferably between 100 MHz and 1 GHz and particularly preferably between 15 kHz and 25 kHz.

3. Apparatus according to one of claims 1 and 2 **characterised in that** it has a frequency-sensitive phase detector (9) for comparing the first (15) and the second electrical reference signals to each other, wherein the frequency-sensitive phase detector (9) is adapted to output a control signal (22) in dependence on the difference frequency and/or the phase difference between the first (15) and the second reference signal for adaptation of the frequency of the intensity modulation of the optical reference signal (18) and/or the frequency of the high-frequency source (1).

4. Apparatus according to one of claims 1 to 3 **characterised in that** the first (15) or second electrical reference signal is connected to the reference input (11) of at least one lock-in amplifier (6).

5. Apparatus according to one of claims 1 to 4 **characterised in that** the mixer elements (4, 5) are adapted to detect the electromagnetic high-frequency radiation (20, 21) for a frequency range between 100 GHz and 100 THz, preferably between 500 GHz and 10 THz and particularly preferably of about 3 THz.

6. Apparatus according to one of claims 1 to 5 **characterised in that** the optical signals (18) are of infrared, preferably near-infrared frequencies.

7. Apparatus according to one of claims 1 to 6 **characterised in that** the source (2, 3) for the spatially superposed optical signals has at least one Ti:sapphire laser.

8. Apparatus according to one of claims 1 to 7 **characterised in that** the source (2, 3) for the spatially superposed optical signals has at least one semiconductor laser.

9. Apparatus according to one of claims 1 to 8 **characterised in that** the source for the spatially superposed optical signals has at least one beam splitter for spatial superpositioning of the two optical signals.

10. Apparatus according to one of claims 1 to 9 **characterised in that** at least one mixer element (4, 5) is an electrooptical detector.

11. Apparatus according to one of claims 1 to 10 **characterised in that** at least one mixer element (4, 5) is an optoelectronic photoconductive high-frequency mixer.

12. Apparatus according to one of claims 1 to 11 **characterised in that** for variation in the phase difference it has a device (23) for varying the wavelength difference between the intensity-modulated optical reference signal (18) and the electromagnetic high-frequency signal (20, 21).

13. Apparatus according to one of claims 1 to 12 **characterised in that** for varying the phase difference it has a device (23) for varying the geometrical phase of the intensity-modulated optical reference signal or the electromagnetic high-frequency signal (20, 21).

14. A high-frequency system having an apparatus for detecting the amplitude and phase of electromagnetic continuous-wave high-frequency radiation according to one of claims 1 to 13 **characterised in that** the electrically driven source (1) of the electromagnetic high-frequency radiation is a high-frequency oscillator with downstream-connected multiplier chain.

15. A high-frequency system having an apparatus for detecting the amplitude and phase of electromagnetic continuous-wave high-frequency radiation according to one of claims 1 to 13 **characterised in that** the electrically driven source (1) of the electromagnetic high-frequency radiation is a quantum cascade laser.

16. A high-frequency system having an apparatus for detecting the amplitude and phase of electromagnetic continuous-wave high-frequency radiation according to one of claims 1 to 13 **characterised in that** the electrically driven source (1) of the electromagnetic high-frequency radiation is a backward-wave generator.

17. A method of detecting the amplitude and phase of electromagnetic continuous-wave high-frequency radiation,
- wherein the radiation of an electrically driven high-frequency source (1) is detected,
- wherein an intensity-modulated optical reference signal (18) is produced,
- wherein the intensity-modulated optical reference signal is produced by spatial superpositioning of two monochromatic optical signals,
- wherein at least one electrical measurement signal (16) with the difference frequency between the frequency of the electromagnetic high-frequency radiation (21) and the frequency of the intensity modulation of the optical reference signal (18) is produced with a first optoelectronic mixer element (5),
- wherein a first electrical reference signal (15) is produced of a frequency which is equal to the difference frequency between the frequency of the electromagnetic high-frequency radiation (20, 21) to be measured and the frequency of the intensity modulation of the optical reference signal (18),
- wherein the phase difference between the phase of the intensity modulation of the optical reference signal (18) and the phase of the electromagnetic high-frequency signal (20, 21) is varied,
- wherein the measurement signal is detected as a function of the phase difference between the phase of the intensity modulation of the optical reference signal (18) and the phase of the electromagnetic high-frequency signal (20, 21), and
a) wherein the frequency of the intensity modulation of the optical radiation and the frequency of the incident electromagnetic high-frequency radiation are equal so that the measurement signal and the first electrical reference signal are dc voltage signals, the magnitude of which is dependent on the phase displacement between the electromagnetic high-frequency signal and the intensity-modulated optical reference signal, and
wherein the difference frequency between the two optical signals is regulated and
wherein the first electrical reference signal (15) is stabilised as a dc voltage signal,
or
b) wherein the intensity modulation of the optical radiation and the electromagnetic high-frequency radiation have mutually different frequencies so that the measurement signal and the first electrical reference signal are ac voltage signals,
wherein a second electrical reference signal is produced with an electrical oscillator and
wherein the frequency of the intensity modulation of the optical reference signal (18) is regulated to the frequency of the second electrical reference signal and wherein the frequency of the first electrical reference signal (15) is stabilised or wherein the frequency of the high-frequency source (1) is regulated and the frequency of the first electrical reference signal (15) is stabilised to the frequency of the second electrical reference signal,
or
c) wherein the intensity modulation of the optical radiation and the electromagnetic high-frequency radiation are of mutually different frequencies so that the measurement signal and the first electrical reference signal are ac signals, and wherein the amplitude and the phase of the high-frequency signal (21) to be measured is determined, wherein the measurement signal (16) is connected to the signal input (12) of at least one lock-in amplifier (6), and
wherein the first electrical reference signal is connected to the reference input of the lock-in amplifier.

18. A method according to claim 17 for the operation of an apparatus according to one of claims 1 to 16.

## Revendications

1. Dispositif de détection de l'amplitude et de la phase d'un rayonnement électromagnétique à haute fréquence à mode continu,
- qui est conçu pour détecter le rayonnement d'une source à haute fréquence (1) excitée électriquement,
ledit dispositif comportant
- une source (2, 3) d'un signal optique de référence modulé en intensité,
- la source (2, 3) du signal optique de référence (18) modulé en intensité étant une source de deux signaux optiques monochromatiques spatialement superposés,
- un premier élément mélangeur optoélectronique (5) destiné à générer au moins un signal de mesure électrique (16) dont la fréquence de différence est située entre la fréquence du rayonnement électromagnétique à haute fréquence (21) à mesurer qui est incident au premier élément mélangeur optoélectronique (5) et la fréquence de la modulation d'intensité du signal optique de référence (18),
- un deuxième élément mélangeur optoélectronique (4) destiné à générer un premier signal électrique de référence (15) qui a une fréquence qui est égale à la fréquence de différence entre la fréquence du rayonnement électromagnétique à haute fréquence (20, 21) à mesurer et la fréquence de la modulation d'intensité du signal optique de référence (18), et
- un dispositif (7) pour détecter le signal de mesure comme fonction de la différence de phase entre la phase de la modulation d'intensité du signal optique de référence (18) et la phase du signal électromagnétique à haute fréquence (20, 21) et
a) un dispositif (23) pour faire varier la différence de phase entre la phase de la modulation d'intensité du signal optique de référence (18) et la phase du signal électromagnétique à haute fréquence (20, 21),
la fréquence de la modulation d'intensité du rayonnement optique et la fréquence du rayonnement électromagnétique à haute fréquence incident étant égales de sorte que le signal de mesure et le premier signal électrique de référence sont des signaux de tension continue dont la valeur dépend du déphasage entre le signal électromagnétique à haute fréquence et le signal optique de référence modulé en intensité, et
un dispositif (10) pour réguler la fréquence de différence entre les deux signaux optiques et pour stabiliser le premier signal électrique de référence (15) en tant que signal de tension continue,
ou
b) un dispositif (23) pour faire varier la différence de phase entre la phase de la modulation d'intensité du signal optique de référence (18) et la phase du signal électromagnétique à haute fréquence (20, 21),
la modulation d'intensité du rayonnement optique et le rayonnement électromagnétique à haute fréquence ayant des fréquences différentes l'une de l'autre de sorte que le signal de mesure et le premier signal électrique de référence sont des signaux de tension alternative,
un oscillateur électrique destiné à générer un deuxième signal électrique de référence et
un dispositif (10) pour réguler la fréquence de la modulation d'intensité du signal optique de référence (18) sur la fréquence du deuxième signal électrique de référence et pour stabiliser la fréquence du premier signal électrique de référence (15) ou un dispositif pour réguler la fréquence de la source à haute fréquence (1) et pour stabiliser la fréquence du premier signal électrique de référence (15) sur la fréquence du deuxième signal électrique de référence,
ou
c) la modulation d'intensité du rayonnement optique et le rayonnement électromagnétique à haute fréquence ayant des fréquences différentes l'une de l'autre de sorte que le signal de mesure et le premier signal électrique de référence sont des signaux de courant alternatif, et
le signal de mesure (16) étant relié à l'entrée de signal (12) d'au moins un amplificateur de blocage (6) destiné à déterminer l'amplitude et la phase du signal à haute fréquence (21) à mesurer,
le premier signal électrique de référence étant relié à l'entrée de référence de l'amplificateur de blocage.

2. Dispositif selon la revendication 1, **caractérisé en ce que** la fréquence de différence entre le rayonnement électromagnétique à haute fréquence (20, 21) et le signal optique de référence (18) modulé en intensité est comprise entre 10 kHz et 1 GHz, de préférence entre 100 MHz et 1 GHz et de façon particulièrement préférée entre 15 kHz et 25 kHz.

3. Dispositif selon l'une des revendications 1 ou 2, **caractérisé en ce qu'**il comporte un détecteur de phase sensible en fréquence (9) pour comparer les premier (15) et deuxième signaux électriques de référence entre eux, le détecteur de phase sensible en fréquence (9) étant destiné à délivrer un signal de commande (22), en fonction de la fréquence de différence et/ou de la fréquence de phase entre les premier (15) et deuxième signaux de référence afin d'adapter la fréquence de la modulation d'intensité du signal optique de référence (18) et/ou de la fréquence de la source à haute fréquence (1).

4. Dispositif selon l'une des revendications 1 à 3, **caractérisé en ce que** les premier (15) et deuxième signaux électriques de référence sont reliés à l'entrée de référence (11) d'au moins un amplificateur de blocage (6).

5. Dispositif selon l'une des revendications 1 à 4, **caractérisé en ce que** les éléments mélangeurs (4, 5) destinés à détecter le rayonnement électromagnétique à haute fréquence (20, 21) sont conçus pour une gamme de fréquences comprise entre 100 GHz et 100THz, avantageusement entre 500 GHz et 10 THz et de façon particulièrement préférée d'environ 3 THz.

6. Dispositif selon l'une des revendications 1 à 5, **caractérisé en ce que** les signaux optiques (18) ont des fréquences dans le domaine infrarouge, de préférence dans le domaine infrarouge proche.

7. Dispositif selon l'une des références revendications 1 à 6, **caractérisé en ce que** la source (2, 3) de signaux optiques spatialement superposés comporte au moins un laser au Ti:saphir.

8. Dispositif selon l'une des revendications 1 à 7, **caractérisé en ce que** la source (2, 3) de signaux optiques spatialement superposés comporte au moins un laser à semi-conducteurs.

9. Dispositif selon l'une des revendications 1 à 8, **caractérisé en ce que** la source de signaux optiques spatialement superposés comporte au moins un répartiteur de rayonnement destiné à superposer dans l'espace les deux signaux optiques.

10. Dispositif selon l'une des revendications 1 à 9, **caractérisé en ce que** au moins un élément mélangeur (4, 5) est un détecteur électro-optique.

11. Dispositif selon l'une des revendications 1 à 10, **caractérisé en ce que** au moins un élément mélangeur (4, 5) est un mélangeur à haute fréquence optoélectronique photoconducteur.

12. Dispositif selon l'une des revendications 1 à 11, **caractérisé en ce que**, pour faire varier la différence de phase, il possède un dispositif (23) destiné à faire varier la différence de trajet optique entre le signal optique de référence modulé en intensité (18) et le signal électromagnétique à haute fréquence (20, 21).

13. Dispositif selon l'une des revendications 1 à 12, **caractérisé en ce que**, pour faire varier la différence de phase, il comporte un dispositif (23) destiné à faire varier la phase géométrique du signal optique de référence modulé en intensité ou du signal électromagnétique à haute fréquence (20, 21).

14. Système à haute fréquence comportant un dispositif de détection de l'amplitude et de la phase d'un rayonnement électromagnétique à haute fréquence à mode continu selon l'une des revendications 1 à 13, **caractérisé en ce que** la source (1), excitée électriquement, du rayonnement électromagnétique à haute fréquence est un oscillateur à haute fréquence en aval duquel est montée une chaîne de multiplication.

15. Système à haute fréquence comportant un dispositif de détection de l'amplitude et de la phase d'un rayonnement électromagnétique à haute fréquence à mode continu selon l'une des revendications 1 à 13, **caractérisé en ce que** la source (1), excitée électriquement, du rayonnement électromagnétique à haute fréquence est un laser quantique en cascade.

16. Système à haute fréquence comportant un dispositif de détection de l'amplitude et de la phase d'un rayonnement électromagnétique à haute fréquence à mode continu selon l'une des revendications 1 à 13, **caractérisé en ce que** la source (1), excitée électriquement, du rayonnement électromagnétique à haute fréquence est un générateur d'ondes inverses.

17. Procédé de détection de l'amplitude et de la phase d'un rayonnement électromagnétique à haute fréquence à mode continu, dans lequel
- on génère le rayonnement d'une source à haute fréquence (1) excitée électriquement,
- on génère un signal optique de référence modulé en intensité (18),
- le signal optique de référence modulée en intensité étant généré par superposition spatiale de deux signaux optiques monochromatiques,
- on génère au moyen d'un premier élément mélangeur optoélectronique (5) au moins un signal électrique de mesure (16) dont la fréquence de différence est comprise entre la fréquence du rayonnement électromagnétique à haute fréquence (21) et la fréquence de la modulation d'intensité du signal optique de référence (18), et
- on génère un premier signal électrique de référence (15) qui a une fréquence qui est égale à la fréquence de différence entre la fréquence du rayonnement électromagnétique à haute fréquence (20, 21) à mesurer et la fréquence de la modulation d'intensité du signal optique de référence (18),
- on fait varier la différence de phase entre la phase de la modulation d'intensité du signal optique de référence (18) et la phase du signal électromagnétique à haute fréquence (20, 21),
- on détecte le signal de mesure comme fonction de la différence de phase entre la phase de la modulation d'intensité du signal optique de référence (18) et la phase du signal électromagnétique à haute fréquence (20, 21), et
a) la fréquence de la modulation d'intensité du rayonnement optique et la fréquence du rayonnement électromagnétique à haute fréquence incident étant égales de sorte que le signal de mesure et le premier signal électrique de référence sont des signaux de tension continue dont la valeur dépend du déphasage entre le signal électromagnétique à haute fréquence et le signal optique de référence modulé en intensité, et
la fréquence de différence entre les deux signaux optiques étant régulée et le premier signal électrique de référence (15) étant stabilisé en tant que signal de tension continue,
ou
b) la modulation d'intensité du rayonnement optique et le rayonnement électromagnétique à haute fréquence ayant des fréquences différentes l'une de l'autre de sorte que le signal de mesure et le premier signal électrique de référence sont des signaux de tension alternative,
un deuxième signal électrique de référence étant généré au moyen d'un oscillateur électrique et
la fréquence de la modulation d'intensité du signal optique de référence (18) étant régulé sur la fréquence du deuxième signal électrique de référence et la fréquence du premier signal électrique de référence (15) étant stabilisée ou la fréquence de la source à haute fréquence (1) étant régulée et la fréquence du premier signal électrique de référence (15) étant stabilisée sur la fréquence du deuxième signal électrique de référence,
ou
c) la modulation d'intensité du rayonnement optique et le rayonnement électromagnétique à haute fréquence ayant des fréquences différentes l'une de l'autre de sorte que le signal de mesure et le premier signal électrique de référence sont des signaux de courant alternatif, et
l'amplitude et la phase du signal à haute fréquence (21) à mesurer étant déterminées,
le premier signal électrique de référence étant relié à l'entrée de référence de l'amplificateur de blocage.

18. Procédé selon la revendication 17 destiné à exploiter un dispositif selon l'une des revendications 1 à 16.
